# EUROPEAN PATENT SPECIFICATION

(11) **EP 2 028 954 B1**
(45) Date of publication and mention of the grant of the patent: **22.07.2009**
(21) Application number: 08709191.4
(22) Date of filing: 25.02.2008
(51) Int. Cl.: A23L 1/054, A23L 1/39, A23L 1/40

(54) **PACKAGED CONCENTRATE FOR PREPARING A BOUILLON, SOUP, SAUCE, GRAVY OR FOR USE AS A SEASONING, THE CONCENTRATE COMPRISING XANTHAN AND CASSIA GUM**
ABGEPACKTES KONZENTRAT ZUR ZUBEREITUNG VON BOUILLON, SUPPE, SAUCE, TUNKE ODER ZUR VERWENDUNG ALS WÜRZE SOWIE DAS KONZENTRAT MIT XANTHAN UND CASSIAGUMMI
CONCENTRÉ CONDITIONNÉ POUR LA PRÉPARATION D'UN BOUILLON, D'UNE SOUPE, D'UNE SAUCE OU D'UN JUS, OU À UTILISER COMME ASSAISONNEMENT, CE CONCENTRÉ COMPRENANT DU XANTHANE ET DE LA GOMME DE CASSIA

(30) Priority: 12.06.2007 EP 07110025
(43) Date of publication of application: 04.03.2009
(73) Proprietor: Unilever N.V., 3012 AL Rotterdam (NL); Unilever PLC, London Greater London EC4P 4BQ (GB)
(72) Inventor: ACHTERKAMP, Georg, 74074 Heilbronn (DE); ACKERMANN, Dieter, K, K,, 74074 Heilbronn (DE); INOUE, Chiharu, NL-3133 AT Vlaardingen (NL); KOHLUS, Reinhard, 74074 Heilbronn (DE); KUHN, Matthias, 74074 Heilbronn (DE)
(74) Representative: Tjon, Hon Kong Guno
(86) International application number: PCT/EP2008/052217
(87) International publication number: WO 2008/151852

(56) References cited:
- EP-A- 1 481 595
- WO-A-96/02152
- WO-A-99/02047
- KATZBAUER B: "Properties and applications of xanthan gum" POLYMER DEGRADATION AND STABILITY, BARKING, GB, vol. 59, no. 1-3, January 1998 (1998-01), pages 81-84, XP004294359 ISSN: 0141-3910

## Description

### Field of the invention

The present invention relates to concentrates for preparing a bouillon, broth, soup, sauce, gravy or for use as a seasoning. More in particular, the invention relates to such concentrates in the form of a jelly.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon, broth, soup, sauce, gravy, or for use as seasoning, which combine some advantages of liquid concentrates (e.g. allowing the use of ingredients which are not fully dried) with some advantages of dry concentrates (e.g. unit dosing).

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

### Summary of the invention

There is a need for (alternative) packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 37 g would dissolve in 1000 ml boiling water in less than 4 minutes, preferably less than 3 minutes). It is also preferred that such jelly has a low tendency to syneresis (water separation), preferably no syneresis, and is preferably an elastic, not too rigid gel (as such will facilitate removal from its packaging; elastic and not too rigid can best be judged by hand-feel). Also it is desired that preferably the gel is easy to manufacture (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1:50 (i.e. allows for high salt levels in the gel). Also, the product should be fairly stable in transport and storage, which is normally at ambient temperatures, but during which temperatures can rise substantially higher. Preferably, the gel should also have a certain strength: preferably the strength should be such that the force (in gram) necessary for a plunger to penetrate 10 mm in a gel is above 30.

It has now been found that such may be achieved (at least in part) by a packaged concentrate for preparing a bouillon, broth, soup, sauce, gravy or for use as a seasoning, said concentrate comprising:
- 20-80% water (weight % based on total packaged concentrate),
- 0.8% to 2.5%, preferably 1%-2%, more preferably 1.2-1.8% (weight % based on water content of concentrate) of a gelling agent comprising the combination of xanthan and cassia gum, xanthan and cassia gum each being present in an amount of 20-80% on the total amount of xanthan + cassia gum,
- 15-40% (weight % based on water content of concentrate), more preferably 15-30%, even more preferably 15-26%, most preferably 20-26% of salt,
- 0.5-60% (weight % based on the total packaged concentrate) of taste imparting components.

Water (as amount) is herein to be understood as the total amount of moisture present. The concentration of salt is to be calculated as (amount of salt) / (amount of salt + total moisture). The same is true for other dissolved matter, such as gelling agent (amount gelling agent) / (amount gelling agent + total moisture).

The packaged concentrate of the present invention advantageously has the appearance of a gel (preferably judged when taken out of the packaging). The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way).

### Detailed description of the invention

In the formulation as set out above, it is preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates of the present invention can be more or less shape stable: it is not an easily flowable product, but it being a gelled product means it can deform (easily) under pressure. By choosing the amount and ratio of xanthan and cassia gum the desired rheology can be obtained. A balance will need to be found between gels which are firm (usually easy to get out of the packaging) by e.g. increasing the amount of xanthan and/or cassia gum, and dissolvability.

The amount and ratio of xanthan and cassia gum as required will e.g. depend on the amount of salt in the formulation, and such amounts and ratio can be determined by the person of average skill in the art of gelled food products without undue burden. Cassia gum and xanthan on their own do not really gel at high salt concentrations, but in combination they do. Typical amounts will be:
- at a salt level of 15%: xanthan + cassia gum (together): 0.5%-2%, more preferably 0.8- 1.5% most preferably 1.2-1.5%,
- at a salt level of 25%: xanthan + cassia gum (together): 1%-2.5%, more preferably 1.2%-1.8%, most preferably 1.2%-1.6%, as wt% on the amount of water as defined above.
   The xanthan and cassia gum are herein preferably used in such amounts that the total amount of xanthan + cassia gum comprises 30-70% cassia gum and 30-70% xanthan (wt% on total amount of xanthan+cassia gum). Preferably, these amounts are 40-60% and 60-40%, respectively, and even more preferred 45-55% and 55-45%, respectively. Most preferred ratio is each component in an amount of about 50% and 50%.
   Besides xanthan and cassia gum, the present concentrate may contain one or more additional gelling and/or thickening agents, such as gelatin, guar gum, tara gum, konjac mannan, modified starch. Advantageously, the combined amount of cassia gum and xanthan present in the packaged concentrate amounts to a concentration of 0.8% to 2.5%, more preferably of 1.0% to 2.0% and most preferably of 1.2% to 1.8% (weight % based on water content of concentrate).
   In the concentrates according to the invention, it is preferred that the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin. The taste-imparting components may also comprise herbs, vegetables, fruits, meat, fish, crustaceans, or particulates thereof. Due to the wet nature of the concentrates according to the invention, such taste-imparting components can be in a not completely dried state, yet the concentrate still allows unit dosing. Generally speaking such "wet" ingredients will have a higher quality or higher quality image. Also wet ingredients may be included which do not contribute to taste, but which are there for visual reasons. Such can e.g. be pieces of certain vegetables. Such may be present in the same amount as the taste-imparting components. In the above, where it says "meat" this is to be understood to comprise beef, pork, chicken (and other fowl). Preferably the amount of taste-imparting components as set out above is 1-40% (by weight on the total packed concentrate). The taste-imparting components can be in a not completely dry state (i.e. partially wet), or be completely wet, but also frozen or dry taste-imparting ingredients may be used herein.
   The packaged concentrate according to the present invention may further comprising 0.5 to 30% (weight on total concentrate) of a taste enhancer selected from the group of monosodium glutamate, 5'-ribotides, organic acids, or mixtures thereof. It is also preferred that the packaged concentrate according to the present invention further comprises 1-30%, preferably 1-15% (weight% based on total packaged concentrate) of emulsified or dispersed oil and/or fat. Salt can also be seen as a taste enhancer, but is herein regarded as a separate category of ingredients.
   For the packaged concentrate according to the present invention, it is preferred that the total water content of the concentrate is 20-60% by weight (based on the total packed concentrate), preferably 40-60% by weight (based on the total packed concentrate). Also, it is preferred that the packaged concentrate according to the invention has a water activity a_{w} of 0.4 to 0.87, preferably 0.5-0.82, more preferably 0.7-0.78, most preferably 0.7-0.75. Preferably, the pH of the concentrate is between 5 and 9, preferably 5-7.
   Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.
   The packaged concentrates according to the present invention are preferably translucent or transparent. This can also make it attractive to choose e.g. packaging which is at least partially transparent.
   The invention further relates to a process for the preparation of a packaged concentrate for preparing a bouillon, broth, soup, sauce, gravy or for use as a seasoning. More particularly, the present invention provides a process for preparing such a packaged concentrate comprising:.
- 20-80% water (weight % based on total packaged concentrate),
- 0.8% to 2.5% (weight % based on water content of concentrate) of a gelling agent comprising the combination of xanthan and cassia gum, xanthan and cassia gum each being present in an amount of 20-80% on the total amount of xanthan + cassia gum,
- 3-40% (weight % based on water content of concentrate), more preferably 3-30%, even more preferably 15-30% and most preferably 15-26% of salt,
- 0.5-60% (weight % based on the total packaged concentrate) of taste imparting components,
   the process comprising the steps of mixing all ingredients, filling the mixture into a packaging, closing the packaging, wherein a heating step is applied prior to and/or during and/or after the filling into the packaging.

The present process for the preparation may suitably comprise the steps of mixing the ingredients with the water, filling into the packaging (e.g. blister packs or cups or tubs) and closing the packs (e.g. by a seal), wherein a heating step is applied prior to, during or after the filling into the packaging, for preservation purposes and/or to facilitate dissolution of ingredients and/or achieving gelation (upon cooling thereafter) of thermoset gels and/or to achieve that e.g. xanthan is in its appropriate conformation. In the present process, the mixture of ingredients may be filled in the packaging in non-gelled or gelled form. According to one embodiment, the (heated) mixture may be poured in moulds, cooled to set. After setting to a gel, the gelled concentrate will have to be removed from the moulds and packaged. It is preferred, however, to manufacture directly into the packaging. It is preferred to mix the ingredients with the water, fill into the packaging and close the packaging, wherein a heating step is applied prior to, and/or during and/or after the filling into the packaging.

In the above process, it is preferred that at least part of the heating stage is to a temperature of at least 50°C, preferably of at least 70 °C, but can be at least 80°C, the temperature required can be determined from the literature by the person of average skill in the art and/or by routine experimentation. Also, it is preferred that the temperature of the mixture during the filling is at least 70°C. When fat is used solid at room temperature, it is preferably melted first before adding to other components.

By manufacturing the packaged concentrates according to the present invention, e.g. by the process as set out above, it was found that concentrates for preparing a bouillon, broth, soup, sauce, gravy or for use as a seasoning could be obtained that are in gel form, are quickly dispersible/dissolvable (e.g. 37 g in less than 4 minutes, preferably less than 3 minutes, when immersed in 1000 ml boiling water), show a low tendency to syneresis, and can be made in such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1 g -10 kg, preferably 2-250 g, more preferably 10-50 g. The portion of the concentrate according to the present invention as packaged is preferably such that the concentrate has a weight excluding packaging) of 1 g -10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners. As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995". It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

Preferably, the packaged concentrate according to the invention (when taken out of the packaging) has the appearance or rheology of a gel. Preferably, the gel appearance and/or gel rheology is evidenced by a ratio of elastic modulus G' : viscous modulus G" of at least 1. The method of measuring these parameters is described below. In scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the present concentrate, a ratio of greater than 1 is suitable. It is preferred, however, that said ratio is greater than 2, even more preferably greater than 3.

The absolute value of the viscous modus G" is preferably greater than 10 Pa, more preferably greater than 20 Pa, and most preferably greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.
   This set of parameters refers to a standard oscillatory test conducted with a standard state of the art low deformation rheometer as commercially available from e.g. Bohlin or TA Instruments.

According to yet another preferred embodiment, the packaged concentrate of the present invention has a gel strength of at least 10 g, even more preferably of at least 15 g and most preferably of at least 20 g.

The requirements as stated herein for G' : G", G" and gel strength should preferably apply to the whole concentrate, and not just for a part of it. Also, it is preferred that the concentrate does not consist of a solid envelope material covering a (liquid) core. It can also be preferred that the concentrate is translucent and/or transparent.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

The invention further relates to the use of the concentrate according to the present invention and as set out above for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50. The present use e.g. implies removing the concentrate from its packaging, and adding it to food or a dish, either during or after its preparation, optionally further applying heat and/or stirring the food or dish with such concentrate.

### Examples

### Example 1a.

A dry mix was prepared comprising:
Pork fat, 690 g
Salt 709 g
Pork protein 295 g
Sugar, 200 g
MSG, 120 g
Pork flavour (dissolvable powder), 60 g

The above mixture was made in a gel with 2170 g water, 17.35 g xanthan and 17.35 g cassia gum. This gel (at 25% salt on water) had a gel strength of approx. 100 g (measured with the method below) and dissolved in about 150 seconds (37 g gel immersed in 1000 g boiling water).

Processing:
Process Description:
   1. Mix all dry ingredients in a Hobart Mixer until homogeneous
   2. Melt fat at 60°C
   3. Add water into a double jacket vessel (Unimix type).and close the vessel.
   4. Add dry mix into the vessel.
   5. Add melted fat to the vessel.
   6. Heat up to 90°C while stirring
   7. Keep at 90°C for 3min while stirring
   8. Hot filling into containers, followed by sealing and leaving to cool to room temperature

### Example 1b.

The above mixture was made in a gel with 2170 g water, 13.01 g xanthan and 13.01 g cassia gum. This gel (at 25% salt on water) had a gel strength of approx. 60 g (measured with the method below) and dissolved in about 90 seconds (37 g gel immersed in 1000 g boiling water).

### Example 1c.

The same dry mix as under 1a was now gelled with 2170 g water, 24.29 g xanthan and 10.41 g ciassia gum. This gel (at 25% salt on water) had a gel strength of approx. 80 g (measured with the method below) and dissolved in about 200 seconds (37 g gel immersed in 1000 g boiling water).

**Results examples (G' and G" at 21 °C, ambient, as measured following the instructions in the description):**

| Example | Storage modulus G' (Pa) | Loss modulus G" (Pa) | Ratio G'/G" | a_{w} | Dillution rate | Dissolution time (s) | syneresis |
|---|---|---|---|---|---|---|---|
| 1a | >71.3 | >13.1 | >5.43 | 0.754 | 1:27 | < 150 | low |
| 1b | >64.0 | >12.2 | >5.26 | 0.748 | 1:27 | < 90 | low |
| 1c | >84.2 | >15.4 | >5.46 | 0.754 | 1:27 | < 210 | low |

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics. '
- Sample Containers used were glass jars (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, said concentrate comprising:
- 20-80% water (weight % based on total packaged concentrate),
- 0.8% to 2.5% (weight % based on water content of concentrate) of a gelling agent comprising the combination of xanthan and cassia gum, xanthan and said cassia gum each being present in an amount of 20-80% on the total amount of xanthan +cassia gum,
- 15-40% (weight % based on water content of concentrate), preferably 15-30% of salt,
- 0.5-60% (weight % based on the total packaged concentrate) of taste imparting components.

2. Packaged concentrate according to claim 1, wherein the concentrate has the rheology of a gel.

3. Packaged concentrate according to any of claims 1-2, wherein the concentrate has the appearance or rheology of a gel as expressed by a ratio of elastic modulus G' : viscous modulus G" of at least 1, preferably at least 3.

4. Packaged concentrate according to any of claims 1-3, wherein the concentrate has a viscous modulus G" of at least 10 Pa.

5. Packaged concentrate according to any of claims 1-4, wherein the amount of the gelling agent comprising the combination of xanthan and cassia gum is 1-2%, preferably 1.2% - 1.8% (weight % based on water content of concentrate).

6. Packaged concentrate according to any of claims 1-5, wherein xanthan and cassia gum each are present in an amount of 30-70% on the total amount of xanthan + cassia gum, preferably in an amount of 40-60%, more preferably in an amount of 45-55%.

7. Packaged concentrate according to any of claims 1-6, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof.

8. Packaged concentrate according to any of claims 1-7, wherein the total water content of the concentrate is 40-60% by weight (based on the total packaged concentrate).

9. Packaged concentrate according to any of claims 1-8, wherein the concentrate has a water activity a_{w} of 0.5 to 0.87, preferably 0.7-0.78.

10. Packaged concentrate according to any of claims 1-9, wherein the concentrate further comprises 1-30%, preferably 1-15% (weight% based on total packaged concentrate) of emulsified oil and/or fat.

11. Packaged concentrate according to any of claims 1-10, wherein the concentrate is packaged in a sealed cup or a sealed tub.

12. Process for preparing a packaged concentrate for preparing a bouillon, broth, soup, sauce, gravy or for use as a seasoning, said concentrate comprising:
- 20-80% water (weight % based on total packaged concentrate),
- 0.8% to 2.5% (weight % based on water content of concentrate) of a gelling agent comprising the combination of xanthan and cassia gum, xanthan and cassia gum each being present in an amount of 20-80% on the total amount of xanthan + cassia gum,
- 3-40% (weight % based on water content of concentrate), more preferably 15-30%, most preferably 15-26% of salt,
- 0.5-60% (weight % based on the total packaged concentrate) of taste imparting components,
the process comprising the steps of mixing all ingredients, filling the mixture into a packaging, closing the packaging, wherein a heating step is applied prior to and/or during and/or after the filling into the packaging.

13. Process according to claim 12, wherein the concentrate has the rheology of a gel.

14. Process according to any of claims 12-13, wherein at least part of the heating step is to a temperature of at least of at least 50°C, preferably of at least 70°C.

15. Use of a concentrate according to any of claims 1-11, for preparing a bouillon, broth, soup, sauce, gravy or for use as a seasoning.

## Patentansprüche

1. Abgepacktes Konzentrat zur Herstellung einer Bouillon, eine Brühe, einer Suppe, einer Soße, eines Bratensafts oder zur Verwendung als Würze, wobei das Konzentrat umfasst:
- 20-80 % Wasser (Gewichts-%, bezogen auf das ganze abgepackte Konzentrat),
- 0,8 bis 2,5 % (Gewichts-%, bezogen auf den Wassergehalt des Konzentrats) eines Geliermittels, das die Kombination aus Xanthan und Kassiagummi umfasst, wobei Xanthan und Kassiagummi jeweils in einer Menge von 20-80 %, bezogen auf die gesamte Menge an Xanthan plus Kassiagummi, vorliegen,
- 15-40 % (Gewichts-%, bezogen auf den Wassergehalt des Konzentrats), vorzugsweise 15-30 % Salz,
- 0,5-60 % (Gewichts-%, bezogen auf das ganze abgepackte Konzentrat) Geschmack verleihender Komponenten.

2. Abgepacktes Konzentrat gemäß Anspruch 1, wobei das Konzentrat die Rheologie eines Gels hat.

3. Abgepacktes Konzentrat gemäß einem der Ansprüche 1-2, wobei das Konzentrat das Aussehen oder die Rheologie eines Gels hat, wie es/sie durch das Verhältnis von Elastizitätsmodul G' : viskoser Modul G" von wenigstens 1, vorzugsweise wenigstens 3, ausgedrückt wird.

4. Abgepacktes Konzentrat gemäß einem der Ansprüche 1-3, wobei das Konzentrat einen viskosen Modul G" von wenigstens 10 Pa hat.

5. Abgepacktes Konzentrat gemäß einem der Ansprüche 1-4, wobei die Menge des Geliermittels, das die Kombination aus Xanthan und Kassiagummi umfasst, 1-2 %, vorzugsweise 1,2-1,8 % (Gewichts-%, bezogen auf den Wassergehalt des Konzentrats) ist.

6. Abgepacktes Konzentrat gemäß einem der Ansprüche 1-5, wobei Xanthan und Kassiagummi jeweils in einer Menge von 30-70 %, bezogen auf die gesamte Menge an Xanthan + Kassiagummi, vorzugsweise in einer Menge von 40-60 %, bevorzugter in einer Menge von 45-55 %, vorliegen.

7. Abgepacktes Konzentrat gemäß einem der Ansprüche 1-6, wobei die Geschmack verleihenden Komponenten eines oder mehrere von flüssigen oder lösbaren Extrakten oder Konzentraten von einem oder mehreren von Fleisch, Fisch, Kräutern, Früchten oder Gemüsen und/oder Aromen und/oder Hefeextrakt und/oder hydrolysiertem Protein mit Herkunft von Gemüse, Soja, Fisch oder Fleisch und/oder Kräutern, Gemüsen, Früchten, Fleisch, Fisch, Crustaceen oder partikelförmigen Materialien davon umfassen.

8. Abgepacktes Konzentrat gemäß einem der Ansprüche 1-7, wobei der Gesamtwassergehalt des Konzentrats 40-60 Gewichts-% (bezogen auf das ganze abgepackte Konzentrat) ist.

9. Abgepacktes Konzentrat gemäß einem der Ansprüche 1-8, wobei das Konzentrat eine Wasseraktivität a_{w} von 0,5 bis 0,87, vorzugsweise von 0,7-0,78, hat.

10. Abgepacktes Konzentrat gemäß einem der Ansprüche 1-9, wobei das Konzentrat außerdem 1-30%, vorzugsweise 1-15 % (Gewichts-%, bezogen auf das ganze abgepackte Konzentrat) an emulgiertem Öl und/oder Fett umfasst.

11. Abgepacktes Konzentrat gemäß einem der Ansprüche 1-10, wobei das Konzentrat in einem versiegelten Becher oder einem versiegelten Bottich verpackt ist.

12. Verfahren zur Herstellung eines abgepackten Konzentrats zur Herstellung einer Bouillon, einer Brühe, einer Suppe, einer Soße, eines Bratensafts oder zur Verwendung als Würze, wobei das Konzentrat umfasst:
- 20-80 % Wasser (Gewichts-%, bezogen auf das ganze abgepackte Konzentrat),
- 0,8 % bis 2,5 % (Gewichts-%, bezogen auf den Wassergehalt des Konzentrats) eines Geliermittels, das die Kombination aus Xanthan und Kassiagummi umfasst, wobei Xanthan und Kassiagummi jeweils in einer Menge von 20-80 %, bezogen auf die Gesamtmenge an Xanthan + Kassiagummi, vorliegen,
- 3-40 % (Gewichts-%, bezogen auf den Wassergehalt des Konzentrats), bevorzugter 15-30 %, am bevorzugtesten 15-26 % Salz,
- 0,5-60 % (Gewichts-%, bezogen auf das ganze abgepackte Konzentrat) Geschmack verleihender Komponenten,
wobei das Verfahren die Schritte Mischer aller Ingredienzien, Füllen des Gemisches in eine Verpackung, Verschließen der Verpackung, wobei ein Erwärmungsschritt vor und/oder während und/oder nach dem Füllen in die Verpackung angewendet wird, umfasst.

13. Verfahren gemäß Anspruch 12, wobei das Konzentrat die Rheologie eines Gels hat.

14. Verfahren gemäß einem der Ansprüche 12-13, wobei wenigstens ein Teil des Erwärmungsschritts auf eine Temperatur von wenigstens 50 °C, vorzugsweise wenigstens 70 °C, ist.

15. Verwendung eines Konzentrats gemäß einem der Ansprüche 1-11 zur Herstellung einer Bouillon, einer Brühe, einer Suppe, einer Soße, eines Bratensafts oder zur Verwendung als Würze.

## Revendications

1. Concentré conditionné permettant de préparer un bouillon, un consommé blanc, une soupe, une sauce, un consommé riche, ou à utiliser comme assaisonnement, ledit concentré comprenant :
■ 20-80% d'eau (% en poids par rapport au concentré conditionné total),
■ 0,8% à 2,5% (% en poids par rapport à la teneur en eau du concentré) d'un agent gélifiant comprenant la combinaison de xanthane et de gomme de cassia, ledit xanthane et ladite gomme de cassia étant chacun présents à raison de 20-80% par rapport à la quantité totale de xanthane + gomme de cassia,
■ 15-40% (% en poids par rapport à la teneur en eau du concentré), de préférence 15-30%, de sel,
■ 0,5-60% (% en poids par rapport au concentré conditionné total) de constituants conférant une saveur.

2. Concentré conditionné selon la revendication 1, dans lequel le concentré a la rhéologie d'un gel.

3. Concentré conditionné selon l'une quelconque des revendications 1-2, dans lequel le concentré a l'aspect ou la rhéologie d'un gel, exprimé par un rapport module élastique G' / module visqueux G" d'au moins 1 , de préférence d'au moins 3.

4. Concentré conditionné selon l'une quelconque des revendications 1-3, dans lequel le concentré présente un module visqueux G" d'au moins 10 Pa.

5. Concentré conditionné selon l'une quelconque des revendications 1-4, dans lequel la quantité de l'agent gélifiant comprenant la combinaison de xanthane et de gomme de cassia est de 1-2%, de préférence de 1,2% - 1,8% (% en poids par rapport à la teneur en eau du concentré).

6. Concentré conditionné selon l'une quelconque des revendications 1 - 5, dans lequel le xanthane et la gomme de cassia sont chacun présents à raison de 30-70% par rapport à la quantité totale de xanthane + gomme de cassia, de préférence à raison de 40-60%, mieux encore à raison de 45-55%.

7. Concentré conditionné selon l'une quelconque des revendications 1-6, dans lequel les constituants conférant une saveur comprennent un ou plusieurs extraits ou concentrés, liquides ou pouvant être dissous, d'un ou plusieurs des ingrédients suivants : viande, poisson, herbes, fruits ou légumes, et/ou des arômes, et/ou de l'extrait de levure, et/ou une protéine hydrolysée tirée de légumes, de soja, de poisson ou de viande et/ou des herbes, des légumes, des fruits, de la viande, du poisson, des crustacés, ou des particules de ceux-ci.

8. Concentré conditionné selon l'une quelconque des revendications 1 - 7, dans lequel la teneur totale en eau du concentré est de 40-60% en poids (par rapport au concentré conditionné total).

9. Concentré conditionné selon l'une quelconque des revendications 1-8, dans lequel le concentré possède une activité de l'eau a_{w} de 0,5 à 0,87, de préférence de 0,7-0,78.

10. Concentré conditionné selon l'une quelconque des revendications 1-9, dans lequel le concentré comprend en outre 1-30%, de préférence 1-15% (% en poids par rapport au concentré conditionné total) d'huile et/ou de graisse émulsionnée.

11. Concentré conditionné selon l'une quelconque des revendications 1-10, dans lequel le concentré est conditionné dans un godet scellé ou dans un bac scellé.

12. Procédé permettant de préparer un concentré conditionné permettant de préparer un bouillon, un consommé blanc, une soupe, une sauce, un consommé riche, ou à utiliser comme assaisonnement, ledit concentré comprenant :
■ 20-80% d'eau (% en poids par rapport au concentré conditionné total),
■ 0,8% à 2,5% (% en poids par rapport à la teneur en eau du concentré) d'un agent gélifiant comprenant la combinaison de xanthane et de gomme de cassia, le xanthane et la gomme de cassia étant chacun présents à raison de 20-80% par rapport à la quantité totale de xanthane + gomme de cassia,
■ 3-40% (% en poids par rapport à la teneur en eau du concentré), mieux encore 15-30%, tout particulièrement 15-26%, de sel,
■ 0,5-60% (% en poids par rapport au concentré conditionné total) de constituants conférant une saveur,
■ le procédé comprenant les étapes consistant à mélanger tous les ingrédients, remplir un emballage avec le mélange, fermer l'emballage, dans lequel une étape de chauffage est effectuée avant et/ou pendant et/ou après le remplissage de l'emballage.

13. Procédé selon la revendication 12, dans lequel le concentré a la rhéologie d'un gel.

14. Procédé selon l'une quelconque des revendications 12-13, dans lequel au moins une partie de l'étape de chauffage se fait à une température d'au moins 50°C, de préférence d'au moins 70°C.

15. Utilisation d'un concentré selon l'une quelconque des revendications 1-11, pour préparer un bouillon, un consommé blanc, une soupe, une sauce, un consommé riche, ou à utiliser comme assaisonnement.
